(19) Europäisches Patentamt
European Patent Office
Office européen des brevets

(11) **EP 3 853 569 B1**

(12) **EUROPÄISCHE PATENTSCHRIFT**

(45) Veröffentlichungstag und Bekanntmachung des Hinweises auf die Patenterteilung:
**25.06.2025 Patentblatt 2025/26**

(21) Anmeldenummer: **19769130.6**

(22) Anmeldetag: **12.09.2019**

(51) Internationale Patentklassifikation (IPC):
**G01L 3/10** *(2006.01)*      **B62D 15/02** *(2006.01)*
**G01D 5/22** *(2006.01)*      **G01D 5/347** *(2006.01)*
**G01L 5/22** *(2006.01)*

(52) Gemeinsame Patentklassifikation (CPC):
**G01L 3/105; B62D 6/10; G01L 5/221;**
B62D 15/0215; G01D 5/2053; G01D 5/2216

(86) Internationale Anmeldenummer:
**PCT/EP2019/074351**

(87) Internationale Veröffentlichungsnummer:
**WO 2020/058080 (26.03.2020 Gazette 2020/13)**

(54) **INDUKTIVER WINKELSENSOR FÜR EINE KRAFTFAHRZEUGLENKUNG**

INDUCTIVE ANGLE SENSOR FOR A MOTOR VEHICLE STEERING SYSTEM

CAPTEUR D'ANGLE INDUCTIF POUR DIRECTION DE VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2018 DE 102018123294**

(43) Veröffentlichungstag der Anmeldung:
**28.07.2021 Patentblatt 2021/30**

(73) Patentinhaber:
• **thyssenkrupp Presta AG**
**9492 Eschen (LI)**
• **thyssenkrupp AG**
**45143 Essen (DE)**

(72) Erfinder:
• **RACZ, Gergely**
**1115 Budapest (HU)**
• **DZSUDZSÁK, Gergely**
**8945 Bak (HU)**
• **SEN, Sedat**
**9435 Heerbrugg (CH)**

(74) Vertreter: **thyssenkrupp Intellectual Property GmbH**
**ThyssenKrupp Allee 1**
**45143 Essen (DE)**

(56) Entgegenhaltungen:
WO-A2-2018/108783      US-A- 3 812 481
US-A1- 2008 007 251      US-A1- 2017 144 703

**Beschreibung**

Die vorliegende Erfindung betrifft eine Drehmomentsensoreinheit mit den Merkmalen des Oberbegriffs des Anspruchs 1, eine elektromechanische Hilfskraftlenkung für ein Kraftfahrzeug aufweisend die Drehmomentsensoreinheit und ein Verfahren zur Bestimmung eines in eine obere Lenkwelle einer Kraftfahrzeuglenkung eingeleiteten Drehmomentes mit den Merkmalen des Oberbegriffs des Anspruchs 12.

Drehmomentsensoren werden in einem Kraftfahrzeug dazu eingesetzt das von einem Fahrer in das Lenkrad eingeleitete Drehmoment zu messen. Derzeit verwendete Drehmomentsensoren sind magnetische Sensoren, deren Messung sehr leicht durch externe Magnetfelder gestört werden kann. Kraftfahrzeuge werden in Zukunft und zum Teil schon jetzt, vollständig oder teilweise elektrisch betrieben, was zu hohen externen Feldbeeinflussungsmessungen durch hochstromführende Kabel führen kann, die sich häufig in der Nähe des Lenksystems befinden. Weiterhin weisen derzeit verwendete magnetische Sensoren eine niedrige Genauigkeit auf.

Ein kombinierter Drehwinkel- und Drehmomentsensoreinheit zur Messung eines Drehwinkels einer Lenkwelle und eines in eine Lenkwelle eingeleiteten Drehmoments, wobei die Sensoreinheit einen ersten induktiven Sensor mit einer ersten Spulenanordnung und einen zweiten induktiven Sensor mit einer zweiten Spulenanordnung umfasst, ist im Stand der Technik aus der US 2008/0007251 A1 bekannt. Weiter ist aus der US 2017/0144703 A1 eine elektromechanische Hilfskraftlenkung mit mehreren Sensoren, die mehrere induktive Sensoren umfassen, die auch zur Drehmomentbestimmung verwendet werden. Ein induktiver Drehmomentsensor, der auch für den Einsatz in Lenksystemen ausgebildet ist, ist des Weiteren aus der WO 2018/108783 A2 bekannt. Zudem ist aus der US 3,812,481 A ein induktiver Drehgeber bekannt, der in der Steuerung, beispielsweise in Motorsteuerung, eingesetzt werden kann.

Es ist Aufgabe der vorliegenden Erfindung einen Drehmomentsensor anzugeben, der eine erhöhte Genauigkeit und einen verringerten Einfluss eines vorhandenen magnetischen Störfeldes auf die Ermittlung des Drehmomentwertes aufweist.

Diese Aufgabe wird von einer Drehmomentsensoreinheit mit den Merkmalen des Anspruchs 1 und einem Verfahren zur Bestimmung eines Drehmomentes mit den Merkmalen des Anspruchs 12 gelöst.

Demnach ist eine Drehmomentsensoreinheit zur Messung eines in eine obere Lenkwelle eines Kraftfahrzeuges eingeleiteten Drehmomentes, wobei die obere Lenkwelle mit einer unteren Lenkwelle über einen Drehstab verbindbar ist, vorgesehen, wobei die Drehmomentsensoreinheit zwei induktive Sensoren aufweist, wobei ein erster induktiver Sensor mit der oberen Lenkwelle zur Messung der Drehlage der oberen Lenkwelle verbindbar ist und ein zweiter induktiver Sensor mit der unteren Lenkwelle zur Messung der Drehlage der unteren Lenkwelle verbindbar ist, und wobei eine Auswerteeinheit dazu ausgebildet ist, die Signale der beiden induktiven Sensoren zu verarbeiten und daraus mittels der zwischen den Drehlagen der beiden Lenkwellen vorliegenden Winkeldifferenz das Drehmoment zu berechnen. Die dem Drehmomentsensor zugrunde liegende induktive Sensorik, ist eine berührungslose Sensortechnologie mit kurzer Reichweite, die es ermöglicht, leitende Objekte in Gegenwart von Staub, Schmutz, Öl und Feuchtigkeit kostengünstig und hochauflösend zu erfassen, was sie äußerst zuverlässig macht.

Erfindungsgemäß weist ein induktiver Sensor jeweils eine mit der entsprechenden Lenkwelle drehfest verbindbare Trägerplatte und eine gegenüber der Trägerplatte raumfeste Leiterplatte auf, wobei auf der Trägerplatte wenigstens eine elektrisch leitende Spur und auf der Leiterplatte eine Abtasteinrichtung mit zwei Spulen, die Teil eines Schwingkreises sind, angeordnet sind, und wobei die Abtasteinrichtung zur Abtastung der wenigstens einen elektrisch leitenden Spur zur Erzeugung eines winkelabhängigen Sensorsignales bei Drehbewegung der entsprechenden Lenkwelle ausgebildet ist.

Vorzugsweise ist die eine elektrisch leitende Spur in sich geschlossen und erstreckt sich um den Mittelpunkt der Trägerplatte.

Vorzugsweise weist die wenigstens eine elektrisch leitende Spur ein Wellenmuster aufweist, dass über eine Lenkwellenumdrehung eine absolute Winkelbestimmung ermöglicht.

Pro Sensor ist eine einzige elektrisch leitende Spur vorgesehen, die von den zwei entsprechenden Spulen abgetastet wird, wobei die beiden Spulen in einem Winkel von 90 Grad zueinander angeordnet sind. In diesem Fall weist die Abtasteinrichtung bevorzugt eine elektronische Steuereinheit auf, die dazu eingerichtet ist, mittels eines Cordic-Algorithmus den Drehwinkel der Lenkwelle zu bestimmen.

Es ist vorteilhaft, wenn die Leiterplatte asymmetrisch zur Mitte der Lenkwelle angeordnet ist, da diese Ausgestaltung eine besonders kompakte Bauweise ermöglicht.

Es ist bevorzugt, dass die wenigstens eine elektrisch leitende Spur aus Kupfer gebildet ist.

Es kann auch vorgesehen sein, dass die beiden Spulen dazu eingerichtet sind, unabhängig von einander verwendet zu werden. Dies ermöglicht zum Beispiel das Zählen der Umdrehungen der jeweiligen Lenkwelle oder die Detektion eines Sektors.

In einer bevorzugten Ausführungsform liegen die Spulen des ersten induktiven Sensors in Längsrichtung auf einer Seite der Abtasteinrichtungen und die Spulen des zweiten induktiven Sensors auf der anderen Seite. So kann sichergestellt werden, dass die induktiven Sensoren ein möglichst ungestörtes Signal detektieren. Dabei ist es vorteilhaft, wenn auf der den Spulen abgewandten Seite der Abtasteinrichtungen jeweils eine elektromagnetische Abschirmung vorgesehen ist, die sicherstellt, dass die Spulen der jeweiligen Abtasteinrichtung nur die zugeordnete Spur auslesen. Zudem kann vorgesehen sein, dass die Abtasteinrichtungen der beiden induktiven Sensoren bevorzugt in Umfangsrichtung auf gegenüberliegenden Seiten des Drehstabes liegen, um Störungen weiter zu minimieren.

Es ist zudem eine elektromechanische Hilfskraftlenkung für ein Kraftfahrzeug vorgesehen, umfassend eine mit einem Lenkrad verbundene obere Lenkwelle und eine mit der oberen Lenkwelle über einen Drehstab verbundene untere Lenkwelle, eine zuvor beschriebene Drehmomentsensoreinheit und einen Elektromotor zur Unterstützung einer in das Lenkrad von einem Fahrer eingebrachten Lenkbewegung in Abhängigkeit des von der Drehmomentsensoreinheit gemessenen Drehmomentes.

Weiterhin ist ein Verfahren zur Bestimmung eines in eine obere Lenkwelle einer Kraftfahrzeuglenkung eingeleiteten Drehmomentes, wobei die obere Lenkwelle mit einer unteren Lenkwelle über einen Drehstab verbunden ist, und ein erster induktiver Sensor mit der oberen Lenkwelle zur Messung der Drehlage der oberen Lenkwelle verbunden ist und ein zweiter induktiver Sensor mit der unteren Lenkwelle zur Messung der Drehlage der unteren Lenkwelle verbunden ist, vorgesehen, wobei das Verfahren folgende Schritte umfasst:

- Messen der absoluten Drehlage der oberen Lenkwelle mittels des ersten induktiven Sensors,
- Messen der absoluten Drehlage der unteren Lenkwelle mittels des zweiten induktiven Sensors,
- Berechnen der Winkeldifferenz zwischen den beiden absoluten Drehlagen,
- Bestimmen des in die obere Lenkwelle eingeleiteten Drehmoments mittels der Gleichung: $T_{STW} = c*\delta$ , wobei c die Federkonstante des Drehstabes und $\delta$ die Winkeldifferenz ist.

Bei dem erfindungsgemäßen Verfahren weist ein induktiver Sensor jeweils eine mit der entsprechenden Lenkwelle drehfest verbundene Trägerplatte und eine gegenüber der Trägerplatte raumfeste Leiterplatte auf, wobei auf der Trägerplatte wenigstens eine elektrisch leitende Spur und auf der Leiterplatte eine Abtasteinrichtung mit zwei Spulen, die Teil eines Schwingkreises sind, angeordnet sind, wobei die Spulen wenigstens eine sich mit der entsprechenden Lenkwelle drehende, elektrisch leitende, um die jeweilige Lenkwelle erstreckende und in sich geschlossene Spur abtasten, in dem eine Änderung einer Resonanzfrequenz des Schwingkreises detektiert wird.

Es ist bevorzugt, dass die wenigstens eine elektrisch leitende Spur ein Wellenmuster aufweist, das über eine Lenkwellenumdrehung eine absolute Winkelbestimmung ermöglicht.

Es ist jeweils eine einzige elektrisch leitende Spur vorgesehen, die von zwei zugeordneten Spulen abgetastet wird, wobei die beiden Spulen in einem Winkel von 90 Grad zueinander angeordnet sind, und der Drehwinkel der entsprechenden Lenkwelle mittels eines Cordic-Algorithmus aus den beiden Spulensignalen bestimmt wird.

Eine bevorzugte Ausführungsform der Erfindung wird nachfolgend anhand der Zeichnungen näher erläutert. Gleiche bzw. funktionsgleiche Bauteile sind dabei figurübergreifend mit denselben Bezugszeichen versehen. Es zeigen:

Fig. 1:    eine schematische Darstellung einer elektromechanischen Kraftfahrzeuglenkung, sowie

Fig. 2:    eine schematische Darstellung eines Lenksystems eines Kraftfahrzeuges mit einem induktiven Drehmomentsensor.

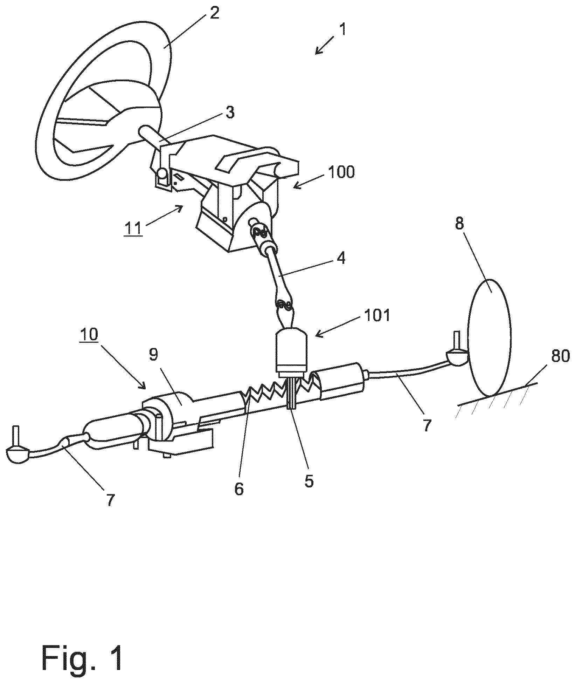

In der Figur 1 ist eine elektromechanische Kraftfahrzeugservolenkung 1 mit einem Lenkrad 2, das mit einer oberen Lenkwelle 3 drehfest gekoppelt ist, schematisch dargestellt. Über das Lenkrad 2 bringt der Fahrer ein entsprechendes Drehmoment als Lenkbefehl in die Lenkwelle 3 ein. Das Drehmoment wird dann über die obere Lenkwelle 3 und untere Lenkwelle 4 auf ein Lenkritzel 5 übertragen. Das Ritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um den Fahrer bei dieser Lenkbewegung zu unterstützen. Die obere Lenkwelle 3 und die untere Lenkwelle 4 sind drehelastisch über einen nicht gezeigten Drehstab miteinander gekoppelt. Eine Drehmomentsensoreinheit 11 erfasst die Verdrehung der oberen Lenkwelle 3 gegenüber der unteren Lenkwelle 4 als ein Maß des an der Lenkwelle 3 oder des Lenkrades 2 manuell ausgeübten Drehmomentes. In Abhängigkeit des von der Drehmomentsensoreinheit 11 gemessen Drehmoments stellt die Servoeinheit 10 eine Lenkunterstützung für den Fahrer bereit. Die Servoeinheit 10 kann dabei als Hilfskraftunterstützungseinrichtung 10, 100, 101 entweder mit einer Lenkwelle 3, dem Lenkritzel 5 oder der Zahnstange 6 gekoppelt sein. Die jeweilige Hilfskraftunterstützung 10, 100, 101 trägt ein Hilfskraftmoment in die Lenkwelle 3, das Lenkritzel 5 und/oder in die Zahnstange 6 ein, wodurch der Fahrer bei der Lenkarbeit unterstützt wird. Die drei unterschiedlichen in Figur 1 dargestellten Hilfskraftunterstützungseinrichtungen 10, 100, 101 zeigen alternative Positionen für deren Anordnung. Üblicherweise ist nur eine einzige der gezeigten Positionen mit einer Hilfskraftunterstützung belegt.

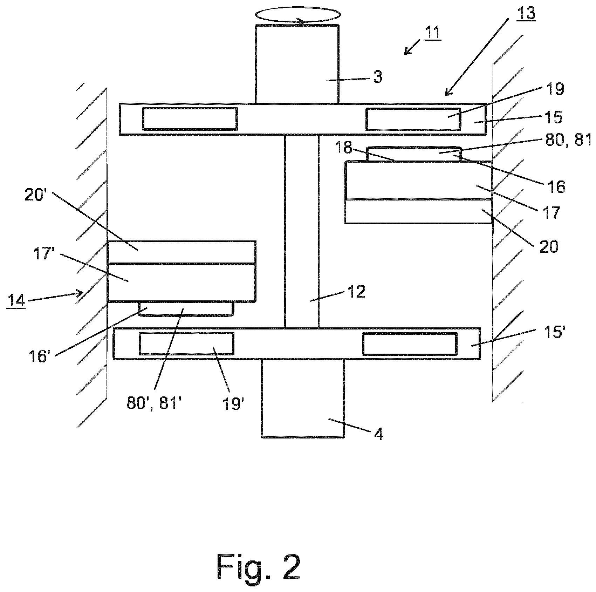

In der Figur 2 ist ein Lenksystem mit einer Drehmomentsensoreinheit 11 dargestellt. Die Drehmomentsensoreinheit 11 ist zwischen der mit dem Lenkrad 2 verbunden oberen Lenkwelle 3 und der mit der oberen Lenkwelle 3 über einen Drehstab 12 drehelastisch verbundenen unteren Lenkwelle 4 angeordnet. Die Drehmomentsensoreinheit 11 weist einen ersten induktiven Sensor 13 und einen zweiten induktiven Sensor 14 auf, wobei der erste induktive Sensor 13 den Drehwinkel der oberen Lenkwelle 3 misst und der zweite induktive Sensor 14 den Drehwinkel der unteren Lenkwelle 4 misst.

Der erste induktive Sensor 13 weist eine mit der oberen Lenkwelle 3 drehfest verbundene erste Trägerplatte 15 auf und eine dazugehörige erste stationäre Abtasteinrichtung 16, die auf einer mit einer ersten elektronischen Steuereinheit 17 verbundenen ersten Leiterplatte 18 angeordnet ist. Die erste Trägerplatte 15 weist eine Spur 19 aus einem elektrisch leitenden Material, vorzugsweise Kupfer, auf. Die Spur 19 ist in sich geschlossen und weist keinen Anfang und kein Ende auf. Das Muster der Spur 19 ist bevorzugt ein Wellenmuster, das gebogene Dreiecksformen aufweist, die sich um den Mittelpunkt der ersten Trägerplatte 15 erstrecken. Das Wellenmuster weist Wellenberge und Wellentäler auf und wiederholt sich periodisch. Das Muster der Spur 19 ist nicht konzentrisch zur oberen Lenkwelle 3 ausgeformt. Es ist so ausgebildet, dass damit über eine Wellenumdrehung eine absolute Winkelbestimmung möglich ist.

Auf der ersten Leiterplatte 18 sind zwei Spulen 80,81 der ersten Abtasteinrichtung 16 angeordnet. Die erste Leiterplatte 18 ist bevorzugt als PCB (printed circuit board) ausgebildet und trägt sämtliche elektronische Komponenten, insbesondere eine Auswerteschaltung und die Spulen 80,81. Die erste Leiterplatte 18 mit den Spulen 80,81 befindet sich unmittelbar unter der ersten Kupferspur 19. Die erste Leiterplatte 18 ist nicht konzentrisch zur Mittelachse der oberen Lenkwelle 3 angeordnet.

Der Drehwinkel der oberen Lenkwelle 3 wird von dem ersten induktiven Sensor 13 geschätzt, in dem die Kupferspur 19 auf der ersten Trägerplatte 15 abgefragt wird. Die ersten Spulen 80,81 sind Teile eines Schwingkreises. Sie 80,81 erzeugen ein hochfrequentes Magnetfeld. Wenn sich die Spur 19 in dem Magnetfeld bewegt, beginnt aufgrund der elektromagnetischen Induktion ein Induktionsstrom zu fließen. Basierend auf der gegenseitigen Induktivitätskopplung ändert sich die Resonanzfrequenz des Schwingkreises. Nähert sich ein Nichteisen-Metallobjekt, wie beispielsweise die Kupferspur, steigt die Resonanzfrequenz des elektrischen Schwingkreises. Die gegenseitige Induktivitätskopplung ändert sich somit, wenn sich die Kupferspur 19 über die Spulen 80,81 hinweg dreht. Der erste Sensor 13 überwacht die Bewegung der leitenden Spur 19 mit der ersten Trägerplatte 15 bzw. der rotierenden oberen Lenkwelle 3 und berechnet dadurch eine absolute Winkelposition. Zwei Spulen 80,81 sind ausreichend, um den Winkel zu berechnen, wenn sie in 90 Grad zueinander angeordnet sind. Die Ausgabe der beiden Spulen 80,81 ist in dem Fall des zuvor beschriebenen Dreiecks-Musters ein Sinussignal und ein Cosinussignal. Die Winkelberechnung basiert auf dem Coordinate Rotation Digital Computer (Cordic)-Algorithmus nach Industriestandard. Dieser Algorithmus ermöglicht es, elementare trigonometrische und hyperbolische Funktionen unter fast ausschließlicher Verwendung von schnellen Operationen, wie Additionen und Multiplikationen mit Zweier-Potenzen, effizient zu berechnen.

Der zweite induktive Sensor 14 weist die gleichen Bauteile wie der erste induktive Sensor 13 und die gleiche Funktionsweise auf. Die Bauteile des zweiten induktiven Sensors 14 sind durch gestrichene Bezugsziffern des ersten induktiven Sensors 13 gekennzeichnet.

Innerhalb der ersten Trägerplatte 15 und der zweiten Trägerplatte 15' sind dabei die erste Abtasteinrichtung 16 und zweite Abtasteinrichtung 16' angeordnet. Die Spulen der Abtasteinrichtungen 80,81,80',81' liegen somit in Längsrichtung auf gegenüberliegenden Seiten der Abtasteinrichtung 16,16' bzw. der elektronischen Steuereinheiten 17,17'. Auf der jeweils anderen Seite der elektronischen Steuereinheit 17,17' ist eine elektromagnetische Abschirmung 20,20' vorgesehen, die sicherstellt, dass die Spulen der jeweiligen Abtasteinrichtung 80,81,80',81' nur die zugeordnete Spur 19,19' auslesen und dabei nicht gestört werden. Die Abtasteinrichtungen 16,16' liegen deshalb auch bevorzugt in Umfangsrichtung auf gegenüberliegenden Seiten des Drehstabes 12.

Aus der Winkeldifferenz der von den beiden induktiven Sensoren 13,14 gemessenen Winkel wird das an der oberen Lenkwelle 3 angreifende Drehmoment berechnet:

$$T_{STW} = c * \delta \, ,$$

wobei c die Federkonstante des Drehstabes und $\delta$ die Winkeldifferenz ist.

Mehrere Leiterplatten mit jeweils zwei Spulen können verwendet werden, um eine hohe Redundanz sowie eine Fähigkeit zur elektronischen Fehlerkompensation (Fehlausrichtung, mechanische Fehler) zu ermöglichen. Die Spulenpaare können paarweise an separaten PCBs oder an einem gemeinsamen PCB angeordnet sein.

Die beiden induktiven Sensoren 13,14 können unabhängig von einander verwendet werden, zum Beispiel zum Zählen der Umdrehungen der Lenkwellen oder zur Detektion eines Sektors. Sie können aber auch zusammen, zum Beispiel in einem Lenkwinkelsensor mit einem Untersetzungsgetriebe, der nach dem Noniusprinzip funktioniert, eingesetzt werden.

**Patentansprüche**

1. Drehmomentsensoreinheit (11) zur Messung eines in eine obere Lenkwelle (3) eines Kraftfahrzeuges eingeleiteten Drehmomentes, wobei die obere Lenkwelle (3) mit einer unteren Lenkwelle (4) über einen Drehstab (12) verbindbar ist, wobei die Drehmomentsensoreinheit (11) zwei induktive Sensoren (13,14) aufweist, wobei ein erster induktiver Sensor (13) mit der oberen Lenkwelle (3) zur Messung der Drehlage der oberen Lenkwelle (3) verbindbar ist und ein zweiter induktiver Sensor (14) mit der unteren Lenkwelle (4) zur Messung der Drehlage der unteren Lenkwelle (4) verbindbar ist, und wobei eine Auswerteeinheit dazu ausgebildet ist, die Signale der beiden induktiven Sensoren (13,14) zu verarbeiten und daraus mittels der zwischen den Drehlagen der beiden Lenkwellen (3,4) vorliegenden Winkeldifferenz das Drehmoment zu berechnen, **dadurch gekennzeichnet, dass** die induktiven Sensoren (13,14) jeweils eine mit der entsprechenden Lenkwelle (3,4) drehfest verbindbare Trägerplatte (15,15') und eine gegenüber der Trägerplatte (15,15') raumfeste Leiterplatte (18,18') aufweist, wobei auf der Trägerplatte (15,15') eine einzige elektrisch leitende Spur (19,19') und auf der Leiterplatte (18,18') eine Abtasteinrichtung (16,16') mit zwei Spulen (80,81,80',81'), die Teil eines Schwingkreises sind, angeordnet sind, wobei die beiden Spulen (80,81,80',81') in einem Winkel von 90 Grad zueinander angeordnet sind, und wobei die Abtasteinrichtung (16,16') zur Abtastung der elektrisch leitenden Spur (19,19') zur Erzeugung eines winkelabhängigen Sensorsignales bei Drehbewegung der entsprechenden Lenkwelle (3,4) ausgebildet ist.

2. Drehmomentsensoreinheit nach Anspruch 1, **dadurch gekennzeichnet, dass** die elektrisch leitende Spur (19,19') in sich geschlossen ist und sich um den Mittelpunkt der Trägerplatte (15,15') erstreckt.

3. Drehmomentsensoreinheit nach Anspruch 1 oder Anspruch 2, **dadurch gekennzeichnet, dass** die elektrisch leitende Spur (19,19') ein Wellenmuster aufweist, dass über eine Lenkwellenumdrehung eine absolute Winkelbestimmung ermöglicht.

4. Drehmomentsensoreinheit nach einem der vorhergehenden Ansprüche, **dadurch gekennzeichnet, dass** die jeweilige Abtasteinrichtung (16,16') jeweils eine elektronische Steuereinheit (17,17') aufweist, die dazu eingerichtet ist, mittels eines Cordic-Algorithmus den Drehwinkel der entsprechenden Lenkwelle (3,4) zu bestimmen.

5. Drehmomentsensoreinheit nach einem der vorhergehenden Ansprüche, **dadurch gekennzeichnet, dass** die jeweilige Leiterplatte (18,18') asymmetrisch zur Mitte der entsprechenden Lenkwelle (3,4) angeordnet ist.

6. Drehmomentsensoreinheit nach einem der vorhergehenden Ansprüche, **dadurch gekennzeichnet, dass** die elektrisch leitende Spur (19,19') aus Kupfer gebildet ist.

7. Drehmomentsensoreinheit nach einem der vorhergehenden Ansprüche, **dadurch gekennzeichnet, dass** die beiden Spulen (80,81,80',81') jeweils dazu eingerichtet sind, unabhängig von einander verwendet zu werden.

8. Drehmomentsensoreinheit nach einem der vorhergehenden Ansprüche, **dadurch gekennzeichnet, dass** die Spulen (80,81,80',81') des ersten induktiven Sensors (13,14) in Längsrichtung auf einer Seite der Abtasteinrichtungen (16,16') und die Spulen (80,81,80',81') des zweiten induktiven Sensors (13,14) auf der anderen Seite liegen.

9. Drehmomentsensoreinheit nach Anspruch 8, **dadurch gekennzeichnet, dass** auf der den Spulen (80,81,80',81') abgewandten Seite der Abtasteinrichtungen (16,16') eine elektromagnetische Abschirmung (20,20') vorgesehen ist, die sicherstellt, dass die Spulen (80,81,80',81') der jeweiligen Abtasteinrichtung (16,16') nur die zugeordnete Spur (19,19') auslesen.

10. Drehmomentsensoreinheit nach einem der vorhergehenden Ansprüche, **dadurch gekennzeichnet, dass** die Abtasteinrichtung (16,16') der beiden induktiven Sensoren (13,14) bevorzugt in Umfangsrichtung auf gegenüberliegenden Seiten des Drehstabes (12) liegen.

11. Elektromechanische Hilfskraftlenkung für ein Kraftfahrzeug, umfassend eine mit einem Lenkrad (2) verbundene obere Lenkwelle (3) und eine mit der oberen Lenkwelle (3) über einen Drehstab (12) verbundene untere Lenkwelle (4), eine Drehmomentsensoreinheit (11) gemäß einem der Ansprüche 1 bis 10 und einen Elektromotor (9) zur Unterstützung einer in das Lenkrad (2) von einem Fahrer eingebrachten Lenkbewegung in Abhängigkeit des von der Drehmomentsensoreinheit (11) gemessenen Drehmomentes.

12. Verfahren zur Bestimmung eines in eine obere Lenkwelle (3) einer Kraftfahrzeuglenkung eingeleiteten Drehmomentes, wobei die obere Lenkwelle (3) mit einer unteren Lenkwelle (4) über einen Drehstab (12) verbunden ist, und ein erster induktiver Sensor (13) mit der oberen Lenkwelle (3) zur Messung der Drehlage der oberen Lenkwelle (3) verbunden ist und ein zweiter induktiver Sensor (14) mit der unteren Lenkwelle (4) zur Messung der Drehlage der unteren Lenkwelle (4) verbunden ist, **dadurch gekennzeichnet, dass** die induktiven Sensoren (13,14) jeweils eine mit der entsprechenden Lenkwelle (3,4) drehfest verbundene Trägerplatte (15,15') und eine gegenüber der Trägerplatte (15,15') raumfeste Leiterplatte (18,18') aufweisen, wobei auf der Trägerplatte (15,15') eine einzige elektrisch leitende Spur (19,19') und auf der Leiterplatte (18,18') eine Abtasteinrichtung (16,16') mit zwei Spulen (80,81,80',81'), die Teil eines Schwingkreises sind, angeordnet sind, wobei die Spulen (80,81,80',81') in einem Winkel von 90 Grad zueinander angeordnet sind und eine sich mit der entsprechenden Lenkwelle (3,4) drehende, elektrisch leitende, um die jeweilige Lenkwelle (3,4) erstreckende und in sich geschlossene Spur (19,19') abtasten, indem eine Änderung einer Resonanzfrequenz des Schwingkreises detektiert wird, und wobei das Verfahren folgende weitere Schritte umfasst:

    • Messen der absoluten Drehlage der oberen Lenkwelle (3) mittels des ersten induktiven Sensors (13),
    • Messen der absoluten Drehlage der unteren Lenkwelle (4) mittels des zweiten induktiven Sensors (14),
    • Berechnen der Winkeldifferenz zwischen den beiden absoluten Drehlagen,
    • Bestimmen des in die obere Lenkwelle (3) eingeleiteten Drehmoments mittels der Gleichung: $T_{STW} = c*\delta$, wobei c die Federkonstante des Drehstabes (12) und $\delta$ die Winkeldifferenz ist,
    • Bestimmen des Drehwinkels der entsprechenden Lenkwelle (3,4) mittels eines Cordic-Algorithmus aus den beiden Spulensignalen.

13. Verfahren nach Anspruch 12, **dadurch gekennzeichnet, dass** die elektrisch leitende Spur (19,19') ein Wellenmuster aufweist, dass über eine Lenkwellenumdrehung eine absolute Winkelbestimmung ermöglicht.

**Claims**

1. Torque sensor unit (11) for measuring a torque introduced into an upper steering shaft (3) of a motor vehicle, wherein the upper steering shaft (3) can be connected to a lower steering shaft (4) via a torsion bar (12), wherein the torque sensor unit (11) has two inductive sensors (13, 14), wherein a first inductive sensor (13) can be connected to the upper steering shaft (3) for measuring the rotational position of the upper steering shaft (3) and a second inductive sensor (14) can be connected to the lower steering shaft (4) for measuring the rotational position of the lower steering shaft (4), and wherein an evaluation unit is designed to process the signals of the two inductive sensors (13, 14) and to calculate the torque therefrom by means of the angular difference existing between the rotational positions of the two steering shafts (3, 4), **characterized in that** the inductive sensors (13, 14) has in each case a carrier plate (15, 15') which can be connected to the corresponding steering shaft (3, 4) in a rotationally fixed manner and a printed circuit board (18, 18') which is spatially fixed with respect to the carrier plate (15, 15'), a single electrically conductive track (19, 19') being provided on the carrier plate (15, 15') and a sensing device (16, 16') with two coils (80, 81, 80', 81') being provided on the printed circuit board (18, 18') with two coils (80, 81, 80', 81'), which are part of a resonant circuit, are arranged on the printed circuit board (18, 18'), the two coils (80, 81, 80', 81') being arranged at an angle of 90 degrees to one another, and the sensing device (16, 16') being designed to sense the electrically conductive track (19, 19') in order to generate an angle-dependent sensor signal when the corresponding steering shaft (3, 4) rotates.

2. Torque sensor unit according to claim 1, **characterized in that** the electrically conductive track (19, 19') is closed in itself and extends around the center point of the carrier plate (15, 15').

3. Torque sensor unit according to claim 1 or claim 2, **characterized in that** the electrically conductive track (19, 19') has a wave pattern that enables an absolute angle determination over a revolution of the steering shaft.

4. Torque sensor unit according to one of the preceding claims,
**characterized in that** the respective sensing device (16, 16') in each case has an electronic control unit (17, 17') which is set up to determine the angle of rotation of the corresponding steering shaft (3, 4) by means of a Cordic algorithm.

5. Torque sensor unit according to one of the preceding claims,
**characterized in that** the respective printed circuit board (18, 18') is arranged asymmetrically to the center of the corresponding steering shaft (3, 4).

6. Torque sensor unit according to one of the preceding claims,
**characterized in that** the electrically conductive track (19, 19') is formed from copper.

7. Torque sensor unit according to one of the preceding claims, **characterized in that** the two coils (80, 81, 80', 81') are each set up to be used independently of one another.

8. Torque sensor unit according to one of the preceding claims, **characterized in that** the coils (80, 81, 80', 81') of the first inductive sensor (13, 14) are located in the longitudinal direction on one side of the sensing devices (16, 16') and the coils (80, 81, 80', 81') of the second inductive sensor (13, 14) are located on the other side.

9. Torque sensor unit according to claim 8, **characterized in that** an electromagnetic shielding (20, 20') is provided on the side of the sensing devices (16, 16') facing away from the coils (80, 81, 80', 81'), which ensures that the coils (80, 81, 80', 81') of the respective sensing device (16, 16') only read out the associated track (19, 19').

10. Torque sensor unit according to one of the preceding claims, **characterized in that** the sensing device (16, 16') of the two inductive sensors (13, 14) are located on opposite sides of the torsion bar (12) preferably in the circumferential direction.

11. Electromechanical power-assisted steering system for a motor vehicle, comprising an upper steering shaft (3) connected to a steering wheel (2) and a lower steering shaft (4) connected to the upper steering shaft (3) via a torsion bar (12), a torque sensor unit (11) according to one of claims 1 to 10 and an electric motor (9) for assisting a steering movement introduced into the steering wheel (2) by a driver in dependence on the torque measured by the torque sensor unit (11).

12. Method for determining a torque introduced into an upper steering shaft (3) of a motor vehicle steering system, the upper steering shaft (3) being connected to a lower steering shaft (4) via a torsion bar (12), and a first inductive sensor (13) is connected to the upper steering shaft (3) for measuring the rotational position of the upper steering shaft (3), and a second inductive sensor (14) is connected to the lower steering shaft (4) for measuring the rotational position of the lower steering shaft (4), **characterized in that** the inductive sensors (13, 14) each have a carrier plate (15, 15') connected in a rotationally fixed manner to the corresponding steering shaft (3, 4) and a printed circuit board (18,18') which is spatially fixed with respect to the carrier plate (15,15'), a single electrically conductive track (19, 19') being arranged on the carrier plate (15, 15') and a sensing device (16, 16') with two coils (80, 81, 80', 81'), which are part of a resonant circuit, being arranged on the printed circuit board (18, 18'), the coils (80, 81, 80', 81') being arranged at an angle of 90 degrees with respect to one another and sense an electrically conductive track (19, 19'), which rotates with the corresponding steering shaft (3, 4), extends around the respective steering shaft (3, 4) and is closed on itself, **in that** a change in a resonant frequency of the resonant circuit is detected, and the method comprising the following further steps:

- Measuring the absolute rotational position of the upper steering shaft (3) using the first inductive sensor (13),
- Measuring the absolute rotational position of the lower steering shaft (4) using the second inductive sensor (14),
- Calculating the angular difference between the two absolute rotational positions,
- Determining the torque introduced into the upper steering shaft (3) by means of the equation: $T_{STW} = c \cdot \delta$, where c is the spring constant of the torsion bar (12) and $\delta$ is the angular difference,
- Determining the angle of rotation of the corresponding steering shaft (3, 4) from the two coil signals by means of a Cordic algorithm.

13. Method according to claim 12, **characterized in that** the electrically conductive track (19, 19') has a wave pattern which enables absolute angles to be determined over a revolution of the steering shaft.

## Revendications

1. Unité de capteur de couple (11) pour mesurer un couple de rotation introduit dans un arbre de direction supérieur (3) d'un véhicule automobile, l'arbre de direction supérieur (3) pouvant être relié à un arbre de direction inférieur (4) par l'intermédiaire d'une barre de torsion (12), l'unité de capteur de couple (11) présentant deux capteurs inductifs (13, 14), un premier capteur inductif (13) pouvant être relié à l'arbre de direction supérieur (3) pour mesurer la position de rotation de l'arbre de direction supérieur (3) et un deuxième capteur inductif (14) pouvant être relié à l'arbre de direction inférieur (4) pour mesurer la position de rotation de l'arbre de direction inférieur (4), et une unité d'évaluation étant conçue pour traiter les signaux des deux capteurs inductifs (13, 14) et pour calculer le couple à partir de ceux-ci au moyen de la différence angulaire présente entre les positions de rotation des deux arbres de direction (3, 4), **caractérisé en ce que** les capteurs inductifs (13, 14) présentent respectivement une plaque de support (15, 15') pouvant être reliée de manière solidaire en rotation à l'arbre de direction (3, 4) correspondant et une carte de circuit imprimé (18, 18') solidaire de l'espace par rapport à la plaque de support (15, 15'), une seule piste électriquement conductrice (19, 19') étant prévue sur la plaque de support (15, 15') et un dispositif de détection (16, 16') étant prévu sur la carte de circuit imprimé (18, 18') avec deux bobines (80, 81, 80', 81') qui font partie d'un circuit oscillant, les deux bobines (80, 81, 80', 81') étant disposées à un angle de 90 degrés l'une par rapport à l'autre, et le dispositif de détection (16, 16') étant conçu pour balayer la piste électriquement conductrice (19, 19') afin de générer un signal de capteur dépendant de l'angle lors du mouvement de rotation de l'arbre de direction correspondant (3, 4).

2. Unité de capteur de couple selon la revendication 1, **caractérisée en ce que** la piste électriquement conductrice (19, 19') est fermée sur elle-même et s'étend autour du centre de la plaque de support (15, 15').

3. Unité de capteur de couple selon la revendication 1 ou la revendication 2, **caractérisée en ce que** la piste électriquement conductrice (19, 19') présente un motif ondulé qui permet une détermination angulaire absolue sur une rotation de l'arbre de direction.

4. Unité de capteur de couple selon l'une des revendications précédentes, **caractérisée en ce que** le dispositif de détection respectif (16, 16') présente respectivement une unité de commande électronique (17, 17') qui est conçue pour déterminer l'angle de rotation de l'arbre de direction correspondant (3, 4) au moyen d'un algorithme Cordic.

5. Unité de capteur de couple selon l'une des revendications précédentes, **caractérisée en ce que** la carte de circuit imprimé respective (18, 18') est disposée de manière asymétrique par rapport au centre de l'arbre de direction correspondant (3, 4).

6. Unité de capteur de couple selon l'une des revendications précédentes, **caractérisée en ce que** la piste électriquement conductrice (19, 19') est formée de cuivre.

7. Unité de capteur de couple selon l'une quelconque des revendications précédentes, **caractérisée en ce que** les deux bobines (80, 81, 80', 81') sont chacune adaptées pour être utilisées indépendamment l'une de l'autre.

8. Unité de capteur de couple selon l'une des revendications précédentes, **caractérisée en ce que** les bobines (80, 81, 80', 81') du premier capteur inductif (13, 14) sont situées longitudinalement d'un côté des dispositifs de détection (16, 16') et les bobines (80, 81, 80', 81') du deuxième capteur inductif (13, 14) sont situées de l'autre côté.

9. Unité de capteur de couple selon la revendication 8, **caractérisée en ce que** sur le côté des dispositifs de détection (16, 16') opposé aux bobines (80, 81, 80', 81') est prévu un blindage électromagnétique (20, 20') qui garantit que les bobines (80, 81, 80', 81') du dispositif de détection respectif (16, 16') ne lisent que la piste associée (19, 19').

10. Unité de capteur de couple selon l'une des revendications précédentes, **caractérisée en ce que** les dispositifs de détection (16, 16') des deux capteurs inductifs (13, 14) sont situés sur des côtés opposés de la barre de torsion (12) de préférence dans la direction circonférentielle.

11. Direction assistée électromécanique pour un véhicule automobile, comprenant un arbre de direction supérieur (3) relié à un volant de direction (2) et un arbre de direction inférieur (4) relié à l'arbre de direction supérieur (3) par l'intermédiaire d'une barre de torsion (12), une unité de détection de couple (11) selon l'une des revendications 1 à 10 et un moteur électrique (9) pour assister un mouvement de direction introduit dans le volant de direction (2) par un conducteur en fonction du couple mesuré par l'unité de capteur de couple (11).

12. Procédé pour déterminer un couple de rotation introduit dans un arbre de direction supérieur (3) d'une direction de véhicule automobile, l'arbre de direction supérieur (3) étant relié à un arbre de direction inférieur (4) par une barre de torsion (12), et un premier capteur inductif (13) est relié à l'arbre de direction supérieur (3) pour mesurer la position de rotation de l'arbre de direction supérieur (3) et un deuxième capteur inductif (14) est relié à l'arbre de direction inférieur (4) pour mesurer la position de rotation de l'arbre de direction inférieur (4), les capteurs inductifs (13, 14) comportant chacun une plaque de support (15, 15') reliée de manière solidaire en rotation à l'arbre de direction correspondant (3, 4) et une plaquette de circuit imprimé (18, 18') solidaire en espace par rapport à la plaque de support (15, 15'), une seule piste électriquement conductrice (19, 19') étant disposée sur la plaque de support (15, 15') et un dispositif de détection (16, 16') avec deux bobines (80, 81, 80', 81'), qui font partie d'un circuit oscillant, étant disposé sur la carte imprimée (18, 18'), les bobines (80, 81, 80',81') sont disposées à un angle de 90 degrés l'une par rapport à l'autre et détectant une piste (19, 19') électriquement conductrice tournant avec l'arbre de direction (3, 4) correspondant, s'étendant autour de l'arbre de direction (3, 4) respectif et se fermant sur elle-même, en détectant une variation d'une fréquence de résonance du circuit oscillant, et dans lequel le procédé comprend les étapes supplémentaires suivantes :

- mesurer la position de rotation absolue de l'arbre de direction supérieur (3) au moyen du premier capteur inductif (13),
- mesurer la position de rotation absolue de l'arbre de direction inférieur (4) au moyen du deuxième capteur inductif (14),
- calculer la différence angulaire entre les deux positions de rotation absolues,
- déterminer le couple introduit dans l'arbre de direction supérieur (3) au moyen de l'équation : $T_{STW} = c*\delta$, où c est la constante de rappel de la barre de torsion (12) et $\delta$ est la différence angulaire ,
- déterminer l'angle de rotation de l'arbre de direction correspondant (3, 4) à partir des deux signaux de bobine au moyen d'un algorithme Cordic.

13. Procédé selon la revendication 12, **caractérisé en ce que** la piste électriquement conductrice (19, 19') présente un motif ondulé qui permet une détermination absolue de l'angle sur une rotation de l'arbre de direction.

# Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080007251 A1
- US 20170144703 A1
- WO 2018108783 A2
- US 3812481 A